# EUROPEAN PATENT APPLICATION

(11) **EP 3 396 002 A1**
(43) Date of publication of application: **31.10.2018**
(21) Application number: 16878797.6
(22) Date of filing: 21.12.2016
(51) Int. Cl.: C22C 38/60, C21D 8/00, F16C 7/02

(54) **STEEL COMPONENT**

(30) Priority: 25.12.2015 JP 2015253562
(71) Applicant: NIPPON STEEL & SUMITOMO METAL CORPORATION, Chiyoda-ku, Tokyo 100-8071 (JP)
(72) Inventor: TERAMOTO Shinya, Tokyo 100-8071 (JP); SHIGA Akira, Tokyo 100-8071 (JP); HASEGAWA Hajime, Tokyo 100-8071 (JP); MIZUKAMI Hideo, Tokyo 100-8071 (JP)
(74) Representative: Vossius & Partner Patentanwälte Rechtsanwälte mbB
(86) International application number: PCT/JP2016/088183
(87) International publication number: WO 2017/110910

(57) **Abstract**

This steel component includes, by mass%, C: 0.50% to 0.65%, Si: 0.60% to 1.20%, Mn: 0.60% to 1.00%, P: 0.040% to 0.060%, S: 0.060% to 0.100%, Cr: 0.05% to 0.20%, V: 0.25% to 0.40%, Bi: 0.0001% to 0.0050%, N: 0.0020% to 0.0080%, and a remainder including Fe and impurities, in which a steel structure is a ferrite-pearlite, and an area ratio of a ferrite therein is 20% or more.

## Description

### [Technical Field of the Invention]

The present invention relates to a steel component.

Priority is claimed on Japanese Patent Application No. 2015-253562, filed on December 25, 2015, the content of which is incorporated herein by reference.

### [Related Art]

In automobile engine components and suspension components, mechanical properties required for a component to be applied are secured by performing forming by hot forging and then performing heat treatment such as quenching and tempering (hereinafter, a component which is subjected to heat treatment is referred to as a quenching and tempering component), or without applying heat treatment (hereinafter, a component which is not subjected to heat treatment is referred to as a non quenching and tempering component). In recent years, from the viewpoint of economic efficiency in the manufacturing process, components manufactured without quenching and tempering, that is, non quenching and tempering components have been widely used.

As an example of an automobile engine component, there is a connecting rod (hereinafter, referred to as a connecting rod). This component is a component which transmits power in a case where a reciprocating motion of a piston is converted into a rotating motion by a crankshaft in an engine. The connecting rod transmits power by a mechanism of fastening an eccentric portion called a pin portion of the crankshaft to the connecting rod while interposing the eccentric portion between a cap portion and a rod portion of the connecting rod, and rotating and sliding the pin portion and the fastening portion of the connecting rod. In order to effectively fasten the cap portion and the rod portion, in recent years, a fracture split type connecting rod has been widely adopted.

A fracture split type connecting rod is obtained by a method of forming a steel material in a shape in which a cap portion and a rod portion are integrally formed by hot forging or the like, and then forming notches in portions corresponding to the boundaries between the cap portion and the rod portion for fracture-splitting the connecting rod. In this method, since the fracture surfaces which are fracture-split are fitted on the mating surfaces of the cap portion and the rod portion, machining for the mating surfaces is not required and also working performed for alignment can be omitted as required. Thus, a degree of working of the component can be significantly reduced and economic efficiency at the time of component manufacturing is significantly improved. It is required that in the fracture split type connecting rod manufactured by such a method, the fracture morphology of the fracture surfaces is brittle and the deformation amount in the vicinity of the fracture surfaces which are fracture-split is small, that is, fracture splitability is good.

A steel material most commonly used for a fracture split type connecting rod in Europe and USA is C70S6 under the DIN standard. This is a high carbon forging steels free of quenching and tempering containing 0.7 mass% of C. In order to suppress a dimensional change at the time of fracture splitting, the metallographic structure thereof is almost constituted of a pearlite having low ductility and low toughness. A plastic deformation amount of C70S6 in the vicinity of a fracture surface at the time of fracturing is small and thus C70S6 has excellent fracture splitability. On the other hand, C70S6 has a structure coarser than the ferrite-pearlite of medium carbon forging steels free of quenching and tempering currently used as connecting rod steels, and thus C70S6 has a low yield ratio (= yield strength/tensile strength). Therefore, there is a problem in that C70S6 cannot be applied to a high strength connecting rod which requires high buckling strength.

In order to increase the yield ratio of the steel material, it is required to reduce the amount of carbon and to increase the ferrite fraction. However, increasing the ferrite fraction increases the ductility of the steel material and a large deformation amount therefore occurs at the time of fracture splitting. Thus, the shape deformation of a sliding portion of the connecting rod to be fastened to a pin portion of a crankshaft is increased and thus a problem in component performance such as deterioration in the circularity of sliding portion of the connecting rod arises.

As a steel material suitable for a high strength fracture split type connecting rod, there are proposed several forging steels free of quenching and tempering. For example, Patent Documents 1 and 2 disclose techniques for improving fracture splitability by adding a large amount of embrittling elements such as Si and P to a steel material and reducing the ductility and toughness of the material itself. Patent Documents 3 and 4 disclose techniques for improving fracture splitability of a steel material by reducing the ductility and toughness of ferrite utilizing precipitation strengthening of second phase particles. Further, Patent Documents 5 to 7 disclose techniques for improving fracture splitability of a steel material by controlling the form of Mn sulfides.

On the other hand, in recent years, there has been an increasing need for high-strengthening of a connecting rod in accordance with an increase in engine output due to the spread of high output diesel engines or turbo engines. As one method for high-strengthening, for example, in the techniques described in Patent Documents 1 to 7, precipitation strengthening of steel by the use of a large amount of V and fine VC has been used. Among elements that form alloy carbides, the amount of V solid-soluted in a steel material at heating (about 1,250°C) before hot forging is large and a large amount of precipitation strengthening is obtained. However, the amount of V solid-soluted in the steel material is limited and further high-strengthening through precipitation strengthening of VC is difficult.

As described above, a steel that can be used for manufacturing a fracture split type connecting rod capable of coping with the recent request for high-strengthening of a connecting rod and having excellent strength cannot be currently obtained in fact.

### [Prior Art Document]

### [Patent Document]

[Patent Document 1] Japanese Patent No. 3637375
[Patent Document 2] Japanese Patent No. 3756307
[Patent Document 3] Japanese Patent No. 3355132 [Patent Document 4] Japanese Patent No. 3988661
[Patent Document 5] Japanese Patent No. 4314851
[Patent Document 6] Japanese Patent No. 3671688
[Patent Document 7] Japanese Patent No. 4268194

### [Disclosure of the Invention]

### [Problems to be Solved by the Invention]

The present invention is made in consideration of the above circumstances and an object thereof is to provide a forging steel free of quenching and tempering component having all of excellent strength, excellent yield strength and yield ratio, and excellent fracture splitability.

### [Means for Solving the Problem]

In order to solve the above problems, the present inventors have conducted intensive investigations on a method for realizing a fracture split type high strength connecting rod. The gist of the present invention obtained as a result is as follows.
(1) According to an aspect of the present invention, there is provided a steel component including, as a chemical composition, by unit mass%, C: 0.50% to 0.65%; Si: 0.60% to 1.20%; Mn: 0.60% to 1.00%; P: 0.040% to 0.060%; S: 0.060% to 0.100%; Cr: 0.05% to 0.20%; V: 0.25% to 0.40%; Bi: 0.00010% to 0.00500%; N: 0.0020% to 0.0080%; Ti: 0% to 0.10%; Nb: 0% to 0.05%; Ca: 0% to 0.005%; Zr: 0% to 0.005%; Mg: 0% to 0.005%; and a remainder including Fe and impurities, in which a steel structure includes a ferrite and a pearlite in a total of 98 area% or more, an area ratio of the ferrite is 20 area% or more, and a number density of Mn sulfides having an equivalent circle diameter of 0.5 µm to 2.0 µm is 500 pieces/mm² to 1,400 pieces/mm².
(2) The steel component according to (1) may include, as the chemical composition, by unit mass%, C: 0.55% to 0.65%.
(3) In the steel component according to (1) or (2), the number density of the Mn sulfides having the equivalent circle diameter of 0.5 µm to 2.0 µm may be 700 pieces/mm² to 1,400 pieces/mm².
(4) The steel component according to any one of (1) to (3) may include, as the chemical composition, by unit mass%, one or more selected from the group consisting of Ti: 0.05% to 0.10%, and Nb: 0.01% to 0.05%.
(5) The steel component according to any one of (1) to (3) may include, as the chemical composition, by unit mass%, one or more selected from the group consisting of Ca: 0.001% to 0.005%, Zr: 0.001% to 0.005%, and Mg: 0.001% to 0.005%.

### [Effects of the Invention]

According to the present invention, it is possible to provide a hot forging steel free of quenching and tempering component, such as a high strength fracture split type connecting rod, having all of excellent strength, excellent yield strength and yield ratio, and excellent fracture splitability.

### [Brief Description of the Drawings]

FIG. 1 is a graph showing a relationship between a Bi content and the number density of Mn sulfides having an equivalent circle diameter of 0.5 µm to 2.0 µm.
FIG. 2 is a graph showing a relationship between the number density of Mn sulfides having an equivalent circle diameter of 0.5 µm to 2.0 µm and a ferrite area ratio.
FIG. 3 is an exploded perspective view showing a fracture split type connecting rod as an example of a steel component according to an embodiment.

### [Embodiments of the Invention]

As a result of conducting intensive investigations on a method for realizing a steel component having all of excellent strength, excellent yield strength and yield ratio, and excellent fracture splitability, the present inventors have obtained the following findings (a) to (e).
(a) In a case where a C content is increased to increase the tensile strength of a steel having a ferrite-pearlite, the yield ratio is reduced. The reason is that an increase amount of yield strength is small compared to an increase amount of tensile strength along with an increase in the C content. This is because while a yield point phenomenon (discontinuous yielding) occurs at the time of tensile breaking in a steel having a ferrite-pearlite mainly including ferrite and having a relatively low C content, the form of yielding at the time of tensile breaking is continuous yielding which is a smooth transition from elastic deformation to plastic deformation in a steel having a ferrite-pearlite mainly including pearlite and having a relatively high C content. In order to impart tensile strength targeted by the present inventors to a forging steel free of quenching and tempering component, it is required to set the C content to 0.50 mass% or more; however, in a case of manufacturing a steel including a C content of 0.50 mass% or more by a common method, the metallographic structure contains little ferrite. In order to increase both the tensile strength and the yield ratio, it is required to suppress a reduction in the amount of ferrite while setting the C content to 0.50 mass% or more.
(b) The present inventors have conducted repeated investigations on a method of suppressing a reduction in the amount of ferrite while increasing the C content. As a result, it has been found that by finely dispersing Mn sulfides which become nuclei for ferritic transformation in steel, the ferritic transformation is promoted during the manufacturing of steel and thus the amount of a ferrite in a ferrite-pearlite can be increased.

However, as a result of the above investigations, it has been found that increasing Mn and S contents and controlling heat treatment conditions are not sufficient as a method for increasing the number density of Mn sulfides. In a case where the Mn and S contents are increased, the number densities of Mn and S are increased. However, in a case where the Mn content is excessive, ferrite becomes too hard and the frequency of the occurrence of chipping at the time of fracturing increases. In a case where the S content is excessive, the plastic deformation amount in the vicinity of the fracture surface at the time of fracture splitting increases, fracture splitability is deteriorated, and further, the frequency of the occurrence of chipping at the time of fracturing increases. Accordingly, in a forging steel free of quenching and tempering component for a machine structural use that is used by being fractured and split, there are upper limits in the Mn and S contents. It has been also investigated that the Mn sulfide number density was increased by optimizing the manufacturing conditions in the allowable ranges of the Mn and S contents. However, it has been difficult to increase the yield ratio to a required level by increasing the number density of Mn sulfides.
(c) The present inventors have conducted repeated investigations on another method for increasing the number density of Mn sulfides while maintaining fracture splitability in predetermined ranges of the Mn and S contents. As a result, the present inventors have found that it is very effective to contain a very small amount of Bi into steel to increase the number density of Mn sulfides.
(d) Further, the present inventors have found that by containing a very small amount of Bi into steel and then optimizing the manufacturing conditions, a further increase in the Mn sulfide number density and an increase in the amount of ferrite are achieved.
(e) The present inventors have found that the yield ratio is increased and further the yield strength is improved by, in addition to increasing the C content and the area ratio of the ferrite in the ferrite-pearlite, combining precipitation strengthening by VC thereto.

Based on the above findings (a) to (e), it has been found that in a case where, by finely dispersing Mn sulfides in steel with the addition of a very small amount of Bi to the steel, while being a high carbon composition having a C content of 0.50% or more, the area ratio of a ferrite in a ferrite-pearlite is 20% or more with respect to the entire forging steels free of quenching and tempering component, the yield ratio of the steel is improved and further the yield strength can be improved, and thus the present invention has been completed.

### <Chemical Composition>

First, the reason for limiting the chemical composition of a forging steel free of quenching and tempering component according to an embodiment will be described. In the following description, the unit of the alloying element contents "mass%" is referred to as "%" below.

### C: 0.50% to 0.65%

C has an effect of securing the tensile strength of the forging steel free of quenching and tempering component. In order to obtain a required strength, it is required that the lower limit of the C content is 0.50%. In a case where the C content is 0.50% or more, the amount of ferrite included in the metallographic structure (steel structure) of the forging steel free of quenching and tempering component is usually less than 20 area% and the yield ratio of the forging steel free of quenching and tempering component is reduced. However, in the forging steel free of quenching and tempering component according to the embodiment, Mn sulfides are finely dispersed by containing the amounts of Mn, S, and Bi in predetermined ranges as described later, and thus the amount of ferrite can be 20 area% or more while setting the C content to 0.50% or more. A preferable lower limit of the C content is 0.52%, 0.55%, or 0.56%.

However, in a case where the C content is more than 0.65%, even with the Mn sulfides being finely dispersed as in the forging steel free of quenching and tempering component according to the embodiment, the amount of ferrite in the forging steel free of quenching and tempering component is not sufficient. The insufficient amount of ferrite causes a reduction in a ratio of yield strength with respect to tensile strength (yield ratio). Accordingly, the upper limit of the C content is 0.65%. A preferable upper limit of the C content is 0.63%, 0.60%, or 0.59%.

In the embodiment, regarding the element contents, in a case where a range, such as 0.50% to 0.65%, is shown, unless otherwise specified, the range includes the numerical values of the upper limit and the lower limit. Thus, 0.50% to 0.65% means a range of 0.50% or more and 0.65% or less.

### Si: 0.60% to 1.20%

Si strengthens the ferrite through solid solution strengthening, and reduces the ductility and toughness of the forging steel free of quenching and tempering component. The reduction in the ductility and toughness of the forging steel free of quenching and tempering component reduces the plastic deformation amount in the vicinity of the fracture surface at the time of fracturing and thus improves fracture splitability. In order to obtain this effect, it is required to set the lower limit of the Si content to 0.60%. On the other hand, in a case where Si is excessively contained, the frequency of the occurrence of chipping of the fracture surface is increased and thus the upper limit of the Si content is 1.20%. A preferable lower limit of the Si content is 0.70%, 0.80%, or 0.85%. A preferable upper limit of the Si content is 1.00%, 0.95%, or 0.90%.

### Mn: 0.60% to 1.00%

Mn strengthens the ferrite through solid solution strengthening, and reduces the ductility and toughness of the forging steel free of quenching and tempering component. The reduction in the ductility and toughness of the forging steel free of quenching and tempering component reduces the plastic deformation amount in the vicinity of the fracture surface at the time of fracturing and thus improves fracture splitability. In addition, Mn is bonded to S to form Mn sulfides. The Mn sulfides function as nuclei for ferritic transformation in a cooling process after component forming by hot forging and have an effect of increasing the amount of ferrite. On the other hand, in a case where Mn is excessively contained, the ferrite becomes too hard and the frequency of the occurrence of chipping at the time of fracturing is increased. In consideration of these problems, the Mn content range is 0.60% to 1.00%. A preferable lower limit of the Mn content is 0.70%, 0.80%, or 0.85%. A preferable upper limit of the Mn content is 0.95%, 0.92%, or 0.90%.

### P: 0.040% to 0.060%

P reduces the ductility and toughness of the ferrite and the pearlite. The reduction in ductility and toughness reduces the plastic deformation amount in the vicinity of the fracture surface at the time of fracturing of the forging steel free of quenching and tempering component and thus P has an effect of improving fracture splitability. However, P exhibits the above-described effects and also remarkably exhibits an effect of easily occurring chipping at the fracture surface by causing grain boundary embrittlement. In consideration of the above effect, the P content range is 0.040% to 0.060%. A preferable lower limit of the P content is 0.042%, 0.045%, or 0.048%. A preferable upper limit of the P content is 0.055%, 0.053%, or 0.050%.

### S: 0.060% to 0.100%

S is bonded to Mn to form Mn sulfides. The Mn sulfides function as nuclei for ferritic transformation in a cooling process after component forming by hot forging and have an effect of increasing the amount of ferrite. In order to obtain the effect, it is required to set the lower limit of the S content to 0.060%. On the other hand, in a case where S is excessively contained, the plastic deformation amount in the vicinity of the fracture surface at the time of fracture splitting is increased and fracture splitability is reduced in some cases. In addition, in a case where S is excessively contained, chipping of the fracture surface is promoted in some cases. Thus, the S content range is 0.060% to 0.100%. A preferable lower limit of the S content is 0.070%, 0.072%, or 0.075%. A preferable upper limit of the S content is 0.095%, 0.090%, or 0.085%.

Since fine Mn sulfides function as nuclei for ferritic transformation in a cooling process after component forming by hot forging, the precipitation of the fine Mn sulfides has an effect of contributing to formation of a ferrite. The total amount of Mn sulfides precipitated in the forging steel free of quenching and tempering component does not significantly change in the composition range of the forging steel free of quenching and tempering component of the embodiment, the situation where the fine Mn sulfides are precipitated can be expressed by the average aspect ratio of the Mn sulfides extended and refined through working by forging being small.

The aspect ratio of the Mn sulfides is a value obtained by dividing the length of the long axis of the Mn sulfide with the length of the short axis of the Mn sulfide. The average aspect ratio of the Mn sulfides in the steel can be measured by mirror polishing the cross section of the steel, then taking 10 structure micrographs of the polished surface with an optical microscope at a magnification of 1,000 times, analyzing the aspect ratios of Mn sulfides having an equivalent circle diameter of 0.1 µm or more in each structure micrograph using image analysis software (for example, Luzex, trade name, produced by Nireco Corporation), and calculating an average value of the aspect ratios of the Mn sulfides having an equivalent circle diameter of 0.1 µm or more in each structure micrograph. It is desirable that the average aspect ratio of the Mn sulfides having an equivalent circle diameter of 0.1 µm or more is in a range of about 1.1 to 1.4.

### Cr: 0.05% to 0.20%

Similarly to Mn, Cr strengthens the ferrite through solid solution strengthening, and reduces ductility and toughness. The reduction in ductility and toughness reduces the plastic deformation amount in the vicinity of the fracture surface at the time of fracturing and thus improves fracture splitability. However, in a case where Cr is excessively contained, a lamellar spacing of the pearlite decreases, and the ductility and toughness of the pearlite are rather increased. Therefore, in a case where Cr is excessively contained, the plastic deformation amount in the vicinity of the fracture surface at the time of fracturing is increased, and thus fracture splitability is deteriorated. Further, in a case where Cr is excessively contained, a bainite is likely to be formed, and due to a reduction in yield ratio, the yield strength is reduced or fracture splitability is remarkably deteriorated. Accordingly, the Cr content range is 0.05% to 0.20%. In a case of considering the above-described effect, a preferable upper limit of the Cr content is 0.17%, 0.15%, or 0.13%. In addition, a preferable lower limit of the Cr content is 0.07%, 0.08%, or 0.10%.

### V: 0.25% to 0.40%

V strengthens the ferrite by forming mainly carbides or carbonitrides during cooling after hot forging and reduces the ductility and toughness of the forging steel free of quenching and tempering component. The reduction in ductility and toughness reduces the plastic deformation amount in the vicinity of the fracture surface at the time of fracturing and enables a hot forged component to have good fracture splitability. In addition, V has an effect of increasing the yield ratio of the hot forged component by the precipitation strengthening of carbides or carbonitrides. In order to obtain these effects, it is required to set the lower limit of the V content to 0.25%.

The lower limit of the V content is preferably 0.27%, 0.28%, or 0.30%. On the other hand, even in a case where V is excessively contained, the effect is saturated, and thus the upper limit of the V content is 0.40%. The upper limit of the V content is preferably 0.35%, 0.33%, or 0.31%.

### Bi: 0.00010% to 0.00500%

Bi is a particularly important element in the forging steel free of quenching and tempering material according to the embodiment. As described above, in order to set the C content to 0.50% or more and to set the amount of ferrite to 20 area% or more, it is required to finely disperse the Mn sulfides functioning as nuclei for ferritic transformation to increase the amount of ferrite. However, in a case where Mn and S are excessively contained, the above-described adverse effects are exhibited. In order to finely disperse the Mn sulfides in an amount such that the amount of ferrite can be 20 area% in the allowable ranges of the Mn and S contents, Bi is required.

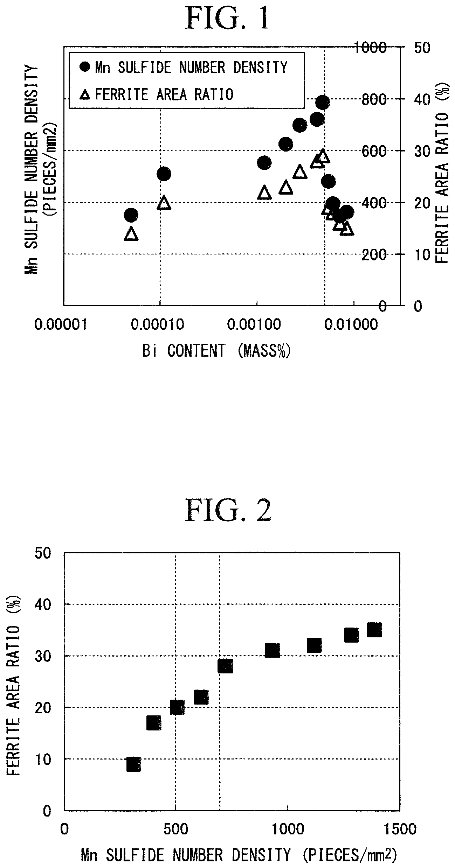

The present inventors conducted the test described below to confirm the effect of Bi. First, the present inventors manufactured various steels containing C: 0.65%, Si: 0.60%, Mn: 1.00%, P: 0.041%, S: 0.060%, Cr: 0.11%, V: 0.26%, N: 0.0023%, and Bi in a content range of 0.00005% to 0.00850% under the same manufacturing conditions. The chemical compositions other than the Bi content were selected as values at which ferrite is least likely to be obtained in the range of chemical compositions of the steel according to the embodiment. Next, the present inventors measured the number density of Mn sulfides having an equivalent circle diameter of 0.5 µm to 2.0 µm (hereinafter, abbreviated as "Mn sulfides") and the amount of ferrite in these steels. FIG. 1 is a graph showing a relationship among the Bi content, the Mn sulfide number density, and the amount of ferrite obtained as described above. FIG. 1 is a semilogarithmic graph in which the horizontal axis representing the Bi content is logarithmically represented. The "Mn sulfide number density" in FIG. 1 refers to the number density of the Mn sulfides having an equivalent circle diameter of 0.5 µm to 2.0 µm.

As shown in FIG. 1, along with the refinement of the solidification structure of the steel by containing 0.00010% or more of Bi into the steel, the Mn sulfides are finely dispersed and the amount of ferrite is increased. In the test under the conditions other than the Bi content which are conditions in which ferrite is least likely to be obtained in the range of chemical compositions of the steel according to the embodiment, in order to set the amount of ferrite to 20 area% or more, 0.00010% or more of Bi is required. Accordingly, the present inventors set the lower limit of the Bi content to 0.00010% so as to reliably set the amount of ferrite to 20 area% or more. However, as shown in FIG. 1, in a case where the Bi content is more than 0.00500%, it was clear that Bi is precipitated on the Mn sulfides and the effect as nuclei for ferritic transformation is lost, resulting in obtaining ferrite in an amount of less than 20 area%. Accordingly, the present inventors set the upper limit of the Bi content to 0.00500%. Thus, in the forging steel free of quenching and tempering component according to the embodiment, the Bi content is 0.00010% to 0.00500%. The lower limit of the Bi content may be 0.00015%, 0.00020%, 0.00030%, 0.00100%, or 0.00200%. The upper limit of the Bi content may be 0.00450%, 0.00420%, or 0.00400%.

### N: 0.0020 to 0.0080%

N functions as a transformation nucleus of the ferrite by forming mainly V nitrides or V carbonitrides during cooling after hot forging to promote ferritic transformation. Accordingly, N has an effect of suppressing the formation of the bainite structure that significantly harms the fracture splitability of the hot forged component. In order to obtain this effect, the lower limit of the N content is 0.0020%. In a case where N is excessively contained, there may be cases where hot ductility is deteriorated and thus cracking and defects are likely to occur during hot working. Therefore, the upper limit of the N content is 0.0080%. The lower limit of the N content may be 0.0040%, 0.0042%, or 0.0045%. The upper limit of the N content may be 0.0075%, 0.0070%, or 0.0060%.

The forging steel free of quenching and tempering component according to the embodiment may further contain one or more selected from the group consisting of Ti and Nb as a chemical composition. The forging steel free of quenching and tempering component according to the embodiment may further contain one or more selected from the group consisting of Ca, Zr, and Mg as a chemical composition. However, even in a case where Ti, Nb, Ca, Zr, and Mg are not contained, the forging steel free of quenching and tempering component according to the embodiment can solve the above problems and thus the lower limit of the amount of each of Ti, Nb, Ca, Zr, and Mg is 0%.

### Ti: 0% to 0.10%

### Nb: 0% to 0.05%

Ti and Nb mainly form carbides or carbonitrides during cooling after hot forging, strengthens the ferrite through precipitation strengthening, and reduces the ductility and toughness of the forging steel free of quenching and tempering component. The reduction in ductility and toughness has an effect of reducing the plastic deformation amount in the vicinity of the fracture surface at the time of fracturing to improve fracture splitability. Accordingly, in order to obtain the above-described effect, the lower limit of the Ti content may be 0.05% and the lower limit of the Nb content may be 0.01%. However, in a case where these elements are excessively contained, the effect is saturated and thus the upper limit of the Ti content is 0.10% and the upper limit of the Nb content is 0.05%.

### Ca: 0% to 0.005%

### Zr: 0% to 0.005%

### Mg: 0% to 0.005%

All of Ca, Zr, and Mg form oxides to become crystallization nuclei of Mn sulfides, and have an effect of uniformly and finely dispersing the Mn sulfides. Accordingly, the lower limit of each of Ca, Zr, and Mg may be 0.001%. On the other hand, in a case where the amount of any of these elements is more than 0.005%, hot workability is deteriorated and hot rolling is difficult to be performed. Thus, the upper limit of each of Ca, Zr, and Mg is 0.005%.

The remainder of the chemical composition of the forging steel free of quenching and tempering component according to the embodiment includes iron (Fe) and impurities. The impurities are elements incorporated from raw materials such as ore or scraps and due to various factors of a manufacturing process in a case where the forging steel free of quenching and tempering component is industrially manufactured and are allowable in a range that does not have adverse effects on the forging steel free of quenching and tempering component according to the embodiment.

Next, the reason for limiting the above-described structure will be described.

### <Steel Structure Includes Ferrite and Pearlite in Total of 98 Area% or More, and Area Ratio of Ferrite Is 20% or More>

It is required that the structure of the forging steel free of quenching and tempering component according to the embodiment has a so-called ferrite and pearlite including ferrite and pearlite in a total of 98 area% or more. The structures other than ferrite and pearlite (for example, martensite, and bainite) may exhibit unexpected adverse effects on the forging steel free of quenching and tempering component according to the embodiment and thus the area ratio thereof is limited to less than 2 area%. The total amount of ferrite and pearlite is preferably 99 area% or more, 99.5 area% or more, or 100 area%. In the forging steel free of quenching and tempering component according to the embodiment, a structure including ferrite and pearlite in a total of 98 area% or more is referred to as a ferrite-pearlite.

In common steel having a ferrite-pearlite, as the C content increases, the yield ratio decreases. The reason is that an increase in yield strength along with an increase in the C content is small compared to an increase in tensile strength along with an increase in the C content. This is because, while a yield point phenomenon (discontinuous yielding) occurs in a ferrite-pearlite mainly including ferrite and having a low C content, the yielding is continuous yielding which is a smooth transition from elastic deformation to plastic deformation in a ferrite-pearlite mainly including pearlite and having a high C content.

On the other hand, in the forging steel free of quenching and tempering component according to the embodiment, the area ratio of the ferrite in the ferrite-pearlite is increased using the Mn sulfides finely dispersed by Bi. The present inventors found that by setting the area ratio of the ferrite to 20 area% or more with respect to the entire forging steel free of quenching and tempering component, a yield point phenomenon occurs even in a high carbon composition and a high yield ratio is obtained. Accordingly, the lower limit of the area ratio of the ferrite with respect to the entire forging steel free of quenching and tempering component is 20 area%. The lower limit of the area ratio of the ferrite with respect to the entire forging steel free of quenching and tempering component may be 22 area%, 23 area%, or 25 area%.

It is preferable that in the structure of the forging steel free of quenching and tempering component according to the embodiment, the remainder excluding the ferrite is almost constituted of a pearlite, and other structures such as a bainite structure are not formed. However, in a range of less than 2 area%, structures other than ferrite and pearlite (for example, bainite, martensite, and austenite) are allowed to be contained. In addition, as the larger the amount of the ferrite is, the more preferable it is. Thus, the upper limit of the area ratio of the ferrite with respect to the entire forging steel free of quenching and tempering component is not particularly limited, but in the range of the chemical composition of the forging steel free of quenching and tempering component according to the embodiment, the upper limit of the area ratio of the ferrite is usually about 50 area%. The upper limit of the area ratio of the ferrite with respect to the entire forging steel free of quenching and tempering component may be 35 area%, 30 area%, or 28 area%.

### <Number Density of Mn Sulfides Having Equivalent Circle Diameter of 0.5 µm to 2.0 µm Is 500 Pieces/mm² or More>

As described above, in order to impart the required tensile strength to the forging steel free of quenching and tempering component, it is required to set the C content to 0.50% or more. However, in a case where the C content is set to 0.50% or more, usually, the metallographic structure of the forging steel free of quenching and tempering component is substantially constituted of only pearlite, and the yield ratio of the forging steel free of quenching and tempering component is reduced. Accordingly, ferritic transformation is promoted and the amount of ferrite is 20 area% or more. Thus, it is required to increase the number density of the Mn sulfides having an equivalent circle diameter of 0.5 µm to 2.0 µm which function as nuclei for ferrite formation. Hereinafter, unless otherwise specified, the "Mn sulfides" mean Mn sulfides having an equivalent circle diameter of 0.5 µm to 2.0 µm.

The present inventors conducted the test described below to confirm the effect of the Mn sulfides. First, the present inventors prepared various steels containing C: 0.62%, Si: 0.92%, Mn: 0.86%, and P: 0.051%, and having different other chemical compositions and different manufacturing conditions. Next, the present inventors measured the number density of the Mn sulfides and the amount of ferrite in these steels. FIG. 2 is a graph showing a relationship between the Mn sulfide number density and the amount of ferrite obtained as described above.

As shown in FIG. 2, the Mn sulfides of a density of 500 pieces/mm² or more were required to set the amount of ferrite to 20 area%. Accordingly, the present inventors set the lower limit of the number density of the Mn sulfides to 500 pieces/mm². In addition, it was found that in a case where the Mn sulfides are contained at a density of 700 pieces/mm² or more, the amount of ferrite is increased. In this case, higher effects can be obtained by increasing the cooling rate after casting. Accordingly, in order to obtain the higher effects, the lower limit of the number density of the Mn sulfides is preferably 700 pieces/mm². In addition, the lower limit of the number density of the Mn sulfides may be 630 pieces/mm², 650 pieces/mm², or 750 pieces/mm². Although the upper limit of the number density of the Mn sulfides is not required to be set, in the range of the above-described chemical composition, it is assumed that the upper limit of the number density of the Mn sulfides is substantially about 1,400 pieces/mm².

It is not required to consider Mn sulfides having an equivalent circle diameter of less than 0.5 µm (hereinafter, referred to as "ultrafine Mn sulfides"). Although the effect of the number density of the ultrafine Mn sulfides on the forging steel free of quenching and tempering component is not sufficiently clarified, it is confirmed that at least, as long as the number density of the Mn sulfides is in the above-described range, the amount of ferrite and the yield value can be set in the defined ranges. In addition, it is not required to consider Mn sulfides having an equivalent circle diameter of more than 2.0 µm (hereinafter, referred to as "coarse Mn sulfides"). The coarse Mn sulfides may have adverse effects on fracture splitability or the like. However, as long as the Mn and S contents and the number density of the Mn sulfides are in the above-described ranges, the formation of the coarse Mn sulfides is suppressed and fracture splitability does not fall below a target value.

Regarding the Mn sulfides having an equivalent circle diameter of 0.5 µm to 2.0 µm whose number is to be controlled, the average grain size and the like are not required to be defined. As long as the number density of the Mn sulfides having an equivalent circle diameter of 0.5 µm to 2.0 µm which are likely to become nuclei of ferrite grains is in the above range, as the number density of the Mn sulfides increases, the area ratio of ferrite increases. Mn sulfides having an equivalent circle diameter out of this range do not contribute to improvement of the ferrite area ratio. Further, the average grain size of the Mn sulfides is not correlated to the area ratio of ferrite. In consideration of the above circumstances, the average grain size of the Mn sulfides is not required to be defined.

A method of measuring the structure and the number density of the Mn sulfides of the forging steel free of quenching and tempering component according to the embodiment is as follows.

The area ratio of ferrite and pearlite may be measured according to a common method. For example, the forging steel free of quenching and tempering component is cut, the cross section is mirror-polished and etched with a nital etchant to expose the structure, a structure enlarged micrograph of the cross section is taken with an optical microscope at a magnification of 200 times, and the enlarged micrograph is analyzed using image analysis software (for example, Luzex, trade name, produced by Nireco Corporation). Thus, the area ratio of ferrite and pearlite is obtained. The micrographing point of the enlarged micrograph is not particularly limited. However, in order to improve accuracy in measurement, it is preferable that the above measurement is performed at at least 5 measurement points and the average value of the measured values of the area ratios of ferrite and pearlite at each measurement point is considered as the area ratios of ferrite and pearlite of the structure of the forging steel free of quenching and tempering component.

The size distribution (equivalent circle diameter, number density) of the Mn sulfides in the forging steel free of quenching and tempering component is obtained by cutting the cross section of the forging steel free of quenching and tempering component parallel with a longitudinal direction, mirror-polishing the cross section, then taking a structure micrograph thereof with an optical microscope at a magnification of 1,000 times, and analyzing the structure micrograph using image analysis software (Luzex, trade name, produced by Nireco Corporation). Based on the analysis result, the number density of the Mn sulfides having an equivalent circle diameter of 0.5 µm to 2.0 µm in the structure micrograph is obtained. The micrographing point of the enlarged micrograph is not particularly limited. However, in order to improve accuracy in measurement, it is preferable that the above measurement is performed at at least 10 measurement points and the average value of the measured values of the number densities of the Mn sulfides having an equivalent circle diameter of 0.5 µm to 2.0 µm at each measurement point is considered as the number density of the Mn sulfides having an equivalent circle diameter of 0.5 µm to 2.0 µm of the forging steel free of quenching and tempering component.

In a case of a fracture split type connecting rod 1 as the forging steel free of quenching and tempering component of the embodiment, new working or a positioning pin is not required for a butting surface and thus the manufacturing process can be remarkably simplified.

A method of manufacturing the forging steel free of quenching and tempering component according to the embodiment includes a process of casting, hot-rolling, and hot forging a steel having the above-described chemical composition of the forging steel free of quenching and tempering component according to the embodiment.

The casting conditions are not particularly limited and casting may be performed under usual conditions. However, it is preferable that the average cooling rate after casting in a range of 1.300°C to 1,500°C is 7 °C/minute or higher. Thus, the number density of the Mn sulfides can be set to 600 pieces/mm² or more by further finely dispersing the Mn sulfides. The hot rolling conditions are not particularly limited and hot rolling may be performed under usual conditions.

In the hot forging, it is required to reduce the cooling rate after forging. The area ratio of the ferrite of the forging steel free of quenching and tempering component according to the embodiment is changed by changing the cooling rate during cooling after forging, that is, during natural cooling or during air blast cooling using an air blast device. For example, by increasing the average cooling rate in a range of 1,300°C to 1,500°C to 3.5 °C/second or higher, the area ratio of the ferrite becomes less than 20 area%. Accordingly, it is required to set the average cooling rate in a range of 1,300°C to 1,500°C during cooling after forging to lower than 3.5°C/second and a method of cooling after forging is preferably natural cooling. In a case of natural cooling, the average cooling rate in a range of 1,300°C to 1,500°C is usually lower than 3.5 °C/second. As the method of cooling after forging, so-called forced cooling such as water cooling is not preferable.

The purpose of the forging steel free of quenching and tempering component according to the embodiment is not particularly limited. However, in a case where the forging steel free of quenching and tempering component is applied to a machine component that is used by being fractured and split, for example, a fracture split type connecting rod, particularly suitable effects are exhibited.

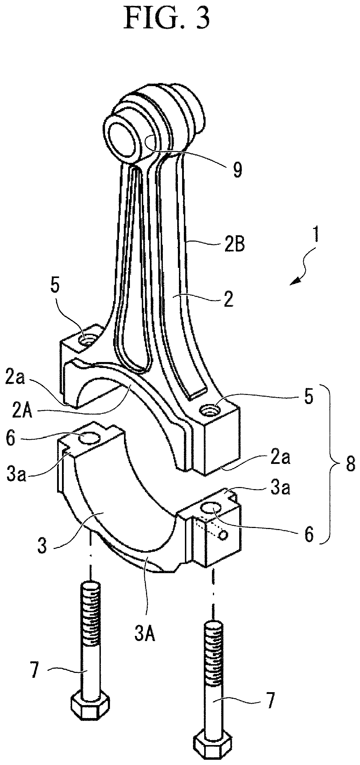

FIG. 3 is an exploded perspective view showing an example of a fracture split type connecting rod (forging steel free of quenching and tempering component) according to the present invention. A fracture split type connecting rod 1 of the example includes a semicircular arc-shaped upper half-split body 2 with a rod and a semicircular arc-shaped lower half-split body 3 which are separated into upper and lower sides as shown in FIG. 3. At both end sides of a semicircular arc-shaped portion 2A of the upper half-split body 2, screw holes 5 having screw grooves for fixing the upper half-split body to the lower half-split body 3 are respectively formed, and at both end sides of a semicircular arc-shaped portion 3A of the lower half-split body 3, insertion holes 6 for fixing the lower half-split body to the upper half-split body 2 are respectively formed.

The semicircular arc-shaped portion 2A of the upper half-split body 2 and the semicircular arc-shaped portion 3A of the lower half-split body 3 are circularly matched and connecting bolts 7 are inserted into the insertion holes 6 and the screw holes 5 at both end sides of each half-split body and engaged therewith. Thus, a circular big end portion 8 is formed. At an upper end side of a rod portion 2B of the upper half-split body 2, a circular small end portion 9 is formed.

The fracture split type connecting rod 1 having the structure shown in FIG 3 is incorporated into an internal combustion engine for converting a reciprocating motion of a piston of an internal combustion engine of an automobile engine or the like into a rotating motion, the small end portion 9 is connected to a piston (not shown), and the big end portion 8 is connected to a connecting rod journal (not shown) of the internal combustion engine.

The fracture split type connecting rod 1 of the embodiment is formed of a forging steel free of quenching and tempering having the above-described components, structure, and Mn sulfide dispersion state, and the semicircular arc-shaped portion 2A of the upper half-split body 2 and the semicircular arc-shaped portion 3A of the lower half-split body 3 are formed by brittle fracturing of a portion which was originally one circular component. For example, notches are provided to a part of a hot forged product, brittle fracture-splitting is caused to occur at the notches as the origin, and butting surfaces 2a of the semicircular arc-shaped portion 2A of the upper half-split body 2 and butting surfaces 3a of the semicircular arc-shaped portion 3A of the lower half-split body 3 are formed. Since these butting surfaces 2a and 3a are formed by brittle fracture-splitting of a member which was originally one member, alignment can be made with high alignment accuracy.

In the fracture split type connecting rod 1 having this structure, new working or a positioning pin is not required for the butting surface and thus the manufacturing process is remarkably simplified.

For example, the fracture split type connecting rod 1 is formed of a steel that includes, by mass%, C: 0.50% to 0.65%, Si: 0.60% to 1.20%, Mn: 0.60% to 1.00%, P: 0.040% to 0.060%, S: 0.060% to 0.100%, Cr: 0.05% to 0.20%, V: 0.25% to 0.40%, Bi: 0.00010% to 0.00500%, N: 0.0020% to 0.0080%, Ti: 0% to 0.10%, Nb: 0% to 0.05%, Ca: 0% to 0.005%, Zr: 0% to 0.005%, Mg: 0% to 0.005%, and a remainder including Fe and impurities, in which the steel structure includes ferrite ad pearlite in a total of 98 area% or more, the area ratio of the ferrite therein is 20 area% or more with respect to the entire steel, and the number density of Mn sulfides having an equivalent circle diameter of 0.5 µm to 2.0 µm is 500 to 1,200 pieces/mm². The steel having this composition is subjected to hot forging and air cooling and is made into a forging steel free of quenching and tempering. Thus, a forging steel free of quenching and tempering product having the above-described targeted properties is obtained.

### [Examples]

The present invention will be described in detail with reference to examples. These examples are for explaining the technical meaning and effects of the present invention and do not limit the scope of the present invention.

A converter melting steel having the composition shown in Table 1 was manufactured by continuous casting and if required, subjected to soaking and blooming to obtain a rolled material having a size of 162 mm square. The average cooling rate after casting in a range of 1,300°C to 1,500°C ("cooling rate after casting") was as shown in Table 1. Next, the material was formed into a steel bar shape having a diameter of 45 mm by hot rolling. The underlined value in Table 1 is a value outside the range of the present invention. In addition, the symbol "-" in Table 1 indicates that the element with the symbol is not added.

Next, a test piece corresponding to the forged connecting rod was prepared by hot forging to investigate the structure and the mechanical properties. Specifically, a base steel bar having a diameter of 45 mm was heated to 1,150°C to 1,280°C and then the steel bar was forged in a direction perpendicular to the length direction of the steel bar so as to have a steel bar thickness of 20 mm. The steel bar after hot forging (forged material) was cooled to room temperature by air cooling through natural cooling (being left in the air) or air blast cooling using an air blast cooling device. The cooling method after hot forging ("cooling method after hot forging") was as shown in Table 1. The average cooling rate of the forged material subjected to air blast cooling was about 3.8 °C/seconds in a range of 1,300°C to 1,500°C. By changing the cooling rate in this manner, the area ratio of the ferrite in the ferrite-pearlite was determined. A JIS No. 4 tensile test piece was processed from the forged material after cooling.

A tensile test was performed at room temperature at a rate of 20 mm/min according to JIS Z 2241. A test piece having a tensile strength of less than 1,130 MPa or a yield strength of less than 900 MPa was determined that the strength was deteriorated. In addition, a test piece having a yield ratio (= yield strength/tensile strength) of less than 0.80, which was obtained by rounding off the value to the third decimal place was determined that the strength was deteriorated.

A sample having a size of 10 mm square was cut from the same portion of the forged material as the tensile test piece and the form of Mn sulfides or the ferrite-pearlite in the steel was observed from a direction perpendicular to the longitudinal direction.

The number density of the Mn sulfides having an equivalent circle diameter of 0.5 µm to 2.0 µm ("Mn sulfide number density") in the steel and the average aspect ratio of the Mn sulfides having an equivalent circle diameter of 0.1 µm or more ("Mn sulfide aspect ratio") in the steel were measured in the following procedure. The cross section of the steel was mirror-polished, then 10 structure micrographs of the polished surface was taken with an optical microscope at a magnification of 1,000 times, and the Mn sulfide number density and the Mn sulfide aspect ratio in each structure micrograph were analyzed and obtained using image analysis software (Luzex, trade name, produced by Nireco Corporation). The average values of the Mn sulfide number densities and the Mn sulfide aspect ratios in each structure micrograph were considered as the Mn sulfide number density and the Mn sulfide aspect ratio of the steel. The length of the short axis of the Mn sulfide is determined based on the forging ratio and the amount of the Mn sulfides is determined based on the amount of S. Thus, as the aspect ratio of the Mn sulfide approaches 1, the size of the Mn sulfide becomes smaller and the number density thereof increases.

In addition, in order to measure the total area ratio of ferrite and pearlite ("total ferrite and pearlite area ratio"), and the area ratio of ferrite ("ferrite area ratio"), the polished surface was etched with a nital etchant, 5 structure micrographs of the etched surface was taken with an optical microscope at a magnification of 200 times, the area ratio of the ferrite in the ferrite-pearlite in each structure micrograph was obtained by analysis using image analysis software (Luzex, trade name, produced by Nireco Corporation), and thus the area ratios of the ferrite in each structure micrograph were averaged.

Further, in order to evaluate the fracture splitability of the steel, an X direction fracture surface deformation amount and a Y direction fracture surface deformation amount were measured. The fracture surfaces after fracture-splitting were matched and fastened by bolts, and the change amount in the inner diameter was measured while setting the direction perpendicular to the fracture direction to an X direction and the fracture direction to a Y direction. A sample of which at least one of the X direction fracture surface deformation amount and the Y direction fracture surface deformation amount was 100 µm or more was considered to have poor fracture splitability.

**[Table 1]**

| Test No | Sort | Chemical composition (mass%) (remainder: Fe and impurities) | | | | | | | | | | | | | | Cooling rate after casting (°C/minute) | Cooling method after hot forging |
|---|---|---|---|---|---|---|---|---|---|---|---|---|---|---|---|---|---|
| | | C | Si | Mn | P | S | Cr | V | Bi | N | Ti | Nb | Ca | Zr | Mg | | |
| A | | 0.50 | 0.92 | 0.85 | 0.051 | 0.084 | 0.11 | 0.31 | 0.00311 | 0.0051 | - | - | - | - | - | 9 | Air cooling |
| B | | 0.65 | 0.94 | 0.87 | 0.053 | 0.081 | 0.13 | 0.28 | 0.00283 | 0.0048 | - | - | - | - | - | 9 | Air cooling |
| C | | 0.60 | 0.62 | 0.84 | 0.048 | 0.083 | 0.09 | 0 32 | 0.00384 | 0.0046 | - | - | - | - | - | 9 | Air cooling |
| D | | 0.58 | 1.19 | 0.81 | 0.047 | 0.087 | 0.11 | 0.34 | 0.00349 | 0.0057 | - | - | - | - | - | 10 | Air cooling |
| E | | 0.60 | 0.87 | 0.61 | 0.048 | 0.080 | 0.10 | 0.31 | 0.00390 | 00067 | - | - | - | - | - | 9 | Air cooling |
| F | | 0.59 | 0.84 | 098 | 0.050 | 0.084 | 0.09 | 0.30 | 0.00418 | 00066 | - | - | - | - | - | 10 | Air cooling |
| G | | 0.58 | 0.93 | 0.87 | 0.042 | 0.086 | 0.09 | 0.31 | 0.00414 | 0.0071 | - | - | - | - | - | 9 | Air cooling |
| H | | 0.61 | 0.93 | 0.89 | 0.059 | 0.085 | 0.11 | 0.29 | 0.00372 | 0.0056 | - | - | - | - | - | 9 | Air cooling |
| I | | 0.62 | 0.90 | 091 | 0.056 | 0.060 | 0.10 | 0.28 | 0.00297 | 0.0051 | - | - | - | - | - | 9 | Air cooling |
| J | | 0.57 | 0.86 | 0.86 | 0.054 | 0.097 | 0.09 | 0.29 | 0.00281 | 00052 | - | - | - | - | - | 9 | Air cooling |
| K | Invention Example | 0.58 | 0.88 | 0.83 | 0.055 | 0.078 | 0.06 | 0.31 | 0.00287 | 0.0057 | - | - | - | - | - | 9 | Air cooling |
| L | | 0.58 | 0.88 | 0.84 | 0.053 | 0.083 | 0.19 | 0.32 | 0.00211 | 0.0064 | - | - | - | - | - | 9 | Air cooling |
| M | | 0.59 | 0.94 | 0.91 | 0.051 | 0.081 | 0.09 | 0.25 | 0.00382 | 0.0042 | - | - | - | - | - | 9 | Air cooling |
| N | | 0.59 | 0.84 | 0.93 | 0.050 | 0.080 | 0.10 | 0.39 | 0.00344 | 0.0059 | - | - | - | - | - | 10 | Air cooling |
| O | | 0.59 | 0.92 | 0.87 | 0.048 | 0.078 | 0.11 | 0.34 | 0.00031 | 0.0056 | - | - | - | - | - | 9 | Air cooling |
| P | | 0.60 | 0.91 | 0.88 | 0.051 | 0.077 | 0.12 | 0.32 | 0.00487 | 0.0043 | - | - | - | - | - | 11 | Air cooling |
| Q | | 0.62 | 0.90 | 0.86 | 0.053 | 0.083 | 0.15 | 0.29 | 0.00339 | 0.0022 | - | - | - | - | - | 10 | Air cooling |
| R | | 0.57 | 0.90 | 0.87 | 0.048 | 0.078 | 0.10 | 0.28 | 0.00322 | 0.0078 | - | - | - | - | - | 9 | Air cooling |
| S | | 0.58 | 0.89 | 0.87 | 0.047 | 0.074 | 0.09 | 0.28 | 0.00282 | 0.0067 | 0.08 | - | - | - | - | 9 | Air cooling |
| T | | 0.60 | 0.88 | 0.90 | 0.049 | 0.073 | 0.13 | 0.31 | 0.00217 | 0.0065 | - | 0.04 | - | - | - | 9 | Air cooling |
| U | | 0.60 | 0.93 | 0.88 | 0.050 | 0.079 | 0.13 | 0.30 | 0.00239 | 0.0045 | - | - | 0.004 | - | - | 9 | Air cooling |
| V | | 0.61 | 0.90 | 0.84 | 0.051 | 0.080 | 0.14 | 0.29 | 0.00373 | 0.0050 | - | - | - | 0003 | 0.002 | 6 | Air cooling |
| W | Comparative Example | 0.58 | 0.88 | 0.84 | 0.045 | 0.082 | 0.12 | 0.30 | 0.00471 | 0.0048 | - | - | - | - | - | 9 | Air blast cooling |
| X | | 0.48 | 0.84 | 0.81 | 0.051 | 0.087 | 0.13 | 0.31 | 0.00338 | 0.0055 | - | - | - | - | - | 10 | Air cooling |
| Y | | 0.67 | 0.89 | 0.89 | 0.052 | 0.076 | 0.09 | 0.27 | 0.00352 | 0.0054 | - | - | - | - | - | 9 | Air cooling |
| Z | | 0.54 | 0.82 | 0.59 | 0.047 | 0.077 | 0.09 | 0.29 | 0.00283 | 0.0052 | 0.02 | - | 0.003 | - | - | 9 | Air cooling |
| AA | | 0.59 | 0.91 | 0.81 | 0.048 | 0.055 | 0.11 | 0.33 | 0.00341 | 0.0053 | - | 0.01 | - | - | - | 10 | Air cooling |
| AB | | 0.61 | 0.90 | 0.84 | 0.047 | 0.085 | 0.23 | 0.32 | 0.00301 | 0.0064 | - | - | - | - | - | 9 | Air cooling |
| AC | | 0.58 | 0.84 | 0.84 | 0.044 | 0.082 | 0.09 | 0.29 | - | 0.0051 | - | - | - | - | - | 9 | Air cooling |
| AD | | 0.60 | 0.90 | 0.80 | 0.045 | 0.079 | 0.13 | 0.30 | 0.00603 | 0.0047 | - | - | - | - | - | 9 | Air cooling |
| AE | | 0.60 | 0.84 | 0.89 | 0.053 | 0.082 | 0.10 | 0.29 | 0.00267 | 0.0017 | - | - | - | 0.004 | 0.002 | 10 | Air cooling |

| | | | | | | | | | | | | | | | | | |
|---|---|---|---|---|---|---|---|---|---|---|---|---|---|---|---|---|---|
| * The underlined value is outside the range of the present invention. | | | | | | | | | | | | | | | | | |

**[Table 2]**

| Test No. | Sort | Mn sulfide number density (pieces/mm²) | Mn sulfide aspect ratio | Total ferrite and pearlite area ratio (mass %) | Ferrite area ratio (mass%) | Tensile strength (MPa) | Yield strength (MPa) | Yield ratio | X direction fracture surface deformation amount (µm) | Y direction fracture surface deformation amount (µm) | Fracture splitability |
|---|---|---|---|---|---|---|---|---|---|---|---|
| A | | 980 | 1.1 | 99 | 35 | 1.139 | 912 | 0.80 | 45 | 32 | Good |
| B | | 941 | 1.3 | 99 | 22 | 1,240 | 995 | 0.80 | 43 | 36 | Good |
| C | | 1,104 | 1.2 | 98 | 29 | 1,205 | 971 | 0.81 | 52 | 34 | Good |
| D | | 1,174 | 1.1 | 98 | 30 | 1,222 | 982 | 0.80 | 50 | 38 | Good |
| E | | 1,248 | 1.1 | 99 | 25 | 1.197 | 965 | 0.81 | 36 | 42 | Good |
| F | | 1,218 | 1.2 | 99 | 31 | 1.215 | 977 | 0.80 | 41 | 45 | Good |
| G | | 1,187 | 1.4 | 99 | 28 | 1,205 | 965 | 0.80 | 43 | 37 | Good |
| H | | 1,047 | 1.3 | 98 | 27 | 1,201 | 965 | 0.80 | 48 | 34 | Good |
| I | | 923 | 1.3 | 99 | 27 | 1,195 | 964 | 0.81 | 45 | 42 | Good |
| J | | 891 | 1.1 | 99 | 32 | 1,212 | 977 | 0.81 | 40 | 44 | Good |
| K | Invention Example | 834 | 1.2 | 99 | 29 | 1,205 | 969 | 0.80 | 51 | 36 | Good |
| L | | 721 | 1.4 | 99 | 26 | 1.194 | 963 | 0.81 | 48 | 40 | Good |
| M | | 1.257 | 1.3 | 99 | 28 | 1,217 | 979 | 0.80 | 52 | 41 | Good |
| N | | 1,134 | 1.2 | 99 | 28 | 1,220 | 982 | 0.80 | 48 | 42 | Good |
| O | | 621 | 1.4 | 99 | 23 | 1,204 | 971 | 0.81 | 47 | 39 | Good |
| P | | 1,374 | 1.4 | 99 | 35 | 1,197 | 973 | 0.81 | 42 | 34 | Good |
| Q | | 1,089 | 1.1 | 99 | 27 | 1,212 | 964 | 0.80 | 50 | 35 | Good |
| R | | 1.049 | 1.3 | 99 | 28 | 1,204 | 976 | 0.81 | 38 | 41 | Good |
| S | | 813 | 1.2 | 99 | 26 | 1,193 | 964 | 0.81 | 42 | 46 | Good |
| T | | 757 | 1.2 | 98 | 28 | 1,206 | 960 | 0.80 | 41 | 34 | Good |
| U | | 789 | 1.1 | 99 | 28 | 1,211 | 972 | 0.80 | 46 | 32 | Good |
| V | | 688 | 1.4 | 99 | 31 | 1,201 | 969 | 0.81 | 43 | 36 | Good |
| W | Comparative Example | 1,128 | 1.2 | 71 | 18 | 1,215 | 890 | 0.73 | 153 | 138 | Poor |
| X | | 1,007 | 1.2 | 99 | 37 | 1,124 | 894 | 0.80 | 123 | 109 | Poor |
| Y | | 983 | 1.4 | 98 | 18 | 1,245 | 891 | 0.72 | 38 | 42 | Good |
| Z | | 489 | 1.1 | 99 | 16 | 1,200 | 874 | 0.73 | 41 | 35 | Good |
| AA | | 213 | 1.3 | 99 | 17 | 1,194 | 887 | 0.74 | 45 | 38 | Good |
| AB | | 999 | 1.2 | 81 | 5 | 1,205 | 822 | 0.68 | 40 | 43 | Good |
| AC | | 356 | 3.3 | 98 | 9 | 1,210 | 837 | 0.69 | 39 | 41 | Good |
| AD | | 385 | 2.5 | 99 | 17 | 1,211 | 891 | 0.74 | 46 | 34 | Good |
| AE | | 870 | 1.3 | 85 | 10 | 1,224 | 834 | 0.68 | 44 | 38 | Good |

| | | | | | | | | | | | |
|---|---|---|---|---|---|---|---|---|---|---|---|
| * The underlined value is outside the range of the present invention | | | | | | | | | | | |

In Tables 1 and 2, in all Invention Examples of Steel Nos. A to V, the chemical composition and the amount of ferrite were in the range defined in the present invention. Since the Mn sulfide number density was appropriately controlled in these invention examples, the yield strength was 900 MPa or more. In a case where the steels in the invention examples are used for forging steel free of quenching and tempering components, a forging steel free of quenching and tempering component having all of excellent strength, excellent yield strength and yield ratio, and excellent fracture splitability is obtained.

In contrast, since the area ratio of the ferrite in the ferrite-pearlite was 20% or less in Comparative Example W, the yield ratio was low and the yield strength was low.

Since the C content was not sufficient in Comparative Example X, the required yield strength was not obtained.

Since the C content was too high in Comparative Example Y, the area ratio of the ferrite in the ferrite-pearlite was 20% or less. Therefore, in Comparative Example Y, the yield ratio was low and the required yield strength was not obtained.

Since the Mn content was not sufficient in Comparative Example Z, the amount of the Mn sulfides was not sufficient and the Mn sulfide number density was not sufficient. Therefore, in Comparative Example Z, the area ratio of the ferrite in the ferrite-pearlite was 20% or less, the yield ratio was low, and the required yield strength was not obtained.

Since the S content was not sufficient in Comparative Example AA, the amount of the Mn sulfides was not sufficient and the Mn sulfide number density was not sufficient. Therefore, in the Comparative Example AA, the area ratio of the ferrite in the ferrite-pearlite was 20% or less, the yield ratio was low, and the required yield strength was not obtained.

Since the Cr content was high or the N content was low in Comparative Examples AB and AE, the bainite structure was formed. Therefore, in Comparative Examples AB and AE, the yield ratio was low, and the required yield strength was not obtained.

Since Comparative Example AC did not contain Bi, the effect of finely dispersing the Mn sulfides by Bi was not obtained and the area ratio of the ferrite in the ferrite-pearlite was 20% or less. Therefore, in Comparative Example AC, the yield ratio was low, and the required yield strength was not obtained.

Since the Bi content was high in Comparative Example AD, the effect of finely dispersing the Mn sulfides by Bi was reduced contrarily, and the area ratio of the ferrite in the ferrite-pearlite was 20% or less. Therefore, in Comparative Example AD, the yield ratio was low, and the required yield strength was not obtained.

### [Brief Description of the Reference Symbols]

1 FRACTURE SPLIT TYPE CONNECTING ROD (FORGING STEEL FREE OF QUENCHING AND TEMPERING COMPONENT)
2 UPPER HALF-SPLIT BODY
2A SEMICIRCULAR ARC-SHAPED PORTION
2B ROD PORTION
2a BUTTING SURFACE
3 LOWER HALF-SPLIT BODY
3A SEMICIRCULAR ARC-SHAPED PORTION
3a BUTTING SURFACE
5 SCREW HOLE
6 INSERTION HOLE
7 CONNECTING BOLT
8 BIG END PORTION
9 SMALL END PORTION

## Claims

1. A steel component comprising, as a chemical composition, by unit mass%,
C: 0.50% to 0.65%;
Si: 0.60% to 1.20%;
Mn: 0.60% to 1.00%;
P: 0.040% to 0.060%;
S: 0.060% to 0.100%;
Cr: 0.05% to 0.20%;
V: 0.25% to 0.40%;
Bi: 0.00010% to 0.00500%;
N: 0.0020% to 0.0080%;
Ti: 0% to 0.10%;
Nb: 0% to 0.05%;
Ca: 0% to 0.005%;
Zr: 0% to 0.005%;
Mg: 0% to 0.005%; and
a remainder comprising Fe and impurities,
wherein a steel structure includes a ferrite and a pearlite in a total of 98 area% or more,
an area ratio of the ferrite is 20 area% or more, and
a number density of Mn sulfides having an equivalent circle diameter of 0.5 µm to 2.0 µm is 500 pieces/mm² to 1,400 pieces/mm².

2. The steel component according to claim 1 comprising, as the chemical composition, by unit mass%,
C: 0.55% to 0.65%.

3. The steel component according to claim 1 or 2,
wherein the number density of the Mn sulfides having the equivalent circle diameter of 0.5 µm to 2.0 µm is 700 pieces/mm² to 1,400 pieces/mm².

4. The steel component according to any one of claims I to 3 comprising, as the chemical composition, by unit mass%,
one or more selected from the group consisting of
Ti: 0.05% to 0.10%, and
Nb: 0.01% to 0.05%.

5. The steel component according to any one of claims 1 to 4 comprising, as the chemical composition, by unit mass%,
one or more selected from the group consisting of
Ca: 0.001% to 0.005%,
Zr: 0.001% to 0.005%, and
Mg: 0.001% to 0.005%.
